Europäisches Patentamt

European Patent Office

Office européen des brevets

(19)

(11) Numéro de publication: **0 236 177 B1**

(12) **FASCICULE DE BREVET EUROPEEN**

(45) Date de publication de fascicule du brevet: **28.07.93**  (51) Int. Cl.5: **G01S 7/298**

(21) Numéro de dépôt: **87400185.2**

(22) Date de dépôt: **27.01.87**

(54) **Procédé d'optimisation de la mémorisation de signaux vidéos dans un transformateur numérique d'images, et transformateur numérique d'images mettant en oeuvre un tel procédé.**

(30) Priorité: **31.01.86 FR 8601377**
**04.04.86 FR 8604860**

(43) Date de publication de la demande:
**09.09.87 Bulletin 87/37**

(45) Mention de la délivrance du brevet:
**28.07.93 Bulletin 93/30**

(84) Etats contractants désignés:
**DE GB IT NL SE**

(56) Documents cités:
**EP-A- 0 068 852**
**EP-A- 0 099 832**
**FR-A- 2 345 784**
**GB-A- 2 047 040**
**US-A- 3 810 174**

**HEWLETT-PACKARD JOURNAL, vol. 34, no. 10, octobre 1983, pages 30-34, Amstelveen, NL; S.C. LEAVITT et al.: "A scan conversion algorithm for displaying ultrasound images"**

(73) Titulaire: **THOMSON-CSF**
**51, Esplanade du Général de Gaulle**
**F-92800 Puteaux(FR)**

(72) Inventeur: **Andrieu, Jean-Pierre THOMSON-CSF**
**SCPI-19, avenue de Messine**
**F-75008 Paris(FR)**
Inventeur: **Gault, Dominique THOMSON-CSF**
**SCPI-19, avenue de Messine**
**F-75008 Paris(FR)**
Inventeur: **Henri, Jean-Claude THOMSON-CSF**
**SCPI-19, avenue de Messine**
**F-75008 Paris(FR)**

(74) Mandataire: **Benoit, Monique et al**
**THOMSON-CSF, SCPI, B.P. 329, 50, rue Jean-Pierre Timbaud**
**F-92402 Courbevoie Cédex (FR)**

EP 0 236 177 B1

**Description**

La présente invention a pour objet un procédé d'optimisation de la mémorisation de signaux vidéos dans un transformateur numérique d'images. Elle a également pour objet un transformateur numérique d'images, souvent appelé TDI (pour Transformateur Digital d'Images), utilisant ce procédé.

On rappelle qu'un TDI est un dispositif qui admet une information vidéo exprimée en coordonnées polaires pour permettre de la visualiser sur un écran à balayage en mode télévision. Une telle information peut-être par exemple le signal vidéo reçu par un radar : ce signal est affecté à chacune des directions successives de l'antenne radar, repérées angulairement ($\theta_i$) par rapport à une direction de référence (en général le Nord), et il est visualisé le long des rayons d'un même cercle, ayant pour centre le centre radar ; l'information ainsi visualisée sur un rayon est appelée "radiale". Pour remplir cette fonction, un TDI comporte principalement :
- des moyens de numérisation de l'information incidente ;
- des moyens de mémorisation de cette information numérisée, appelés "mémoire image" et contenant à tout instant l'image telle qu'elle doit être visualisée sur l'écran, un certain nombre de bits de cette mémoire étant affectés à chacun des points de l'écran, appelés "pixels", considérés comme distincts ;
- des moyens de conversion de coordonnées : en effet, une information à visualiser sur un écran de type télévision doit être exprimée en coordonnées cartésiennes ;
- des circuits dits de rémanence artificielle, assurant un vieillissement de l'information mémorisée selon une loi prédéfinie.

Lorsque la quantité d'informations à visualiser devient importante, ce qui est le cas par exemple lorsque la vitesse de rotation de l'antenne radar augmente, il se pose un problème au niveau des temps d'accès à la mémoire image : en effet, cette mémoire doit être de grande capacité, ce qui exclut pour des raisons économiques l'utilisation de mémoires très rapides. La charge en accès mémoire est la suivante :
- lecture de la mémoire, à un rythme imposé par l'écran à balayage télévision ;
- rafraîchissement de la mémoire, en général imposé par les technologies utilisées pour les mémoires de grande capacité ;
- écriture du signal vidéo dans la mémoire.

En outre, dans un TDI, le processus de conversion se fait le long des radiales et, au voisinage du centre radar, il apparaît que les points convertis sont extrêmement proches les uns des autres et tombent souvent sur le même pixel, ce qui multiplie les accès mémoires. A titre d'exemple, pour un écran carré de 1024 x 1024 pixels, si on a une image (centrée) comportant 8192 radiales par tour d'antenne, chaque radiale comportant 512 points, on voit que l'écriture d'une image nécessite $8192 \times 512 \# 4.10^6$ accès par tour, alors que l'écriture de 1024 x 1024 pixels ne nécessite en principe qu'environ $10^6$ accès par tour.

Une solution consisterait à permettre l'accès à plusieurs pixels en parallèle pour l'écriture dans la mémoire image. Toutefois, du fait que les points incidents n'ont pas une structure régulière par rapport à l'organisation de la mémoire, un tel parallélisme est assez difficile et assez lourd à mettre en oeuvre.

Une autre solution consiste à interposer une mémoire intermédiaire, dite mémoire de blocs, entre l'information incidente et la mémoire image. L'organisation de cette mémoire intermédiaire est identique à celle de la mémoire image mais les pixels adjacents sont en outre regroupés en pavés, ou blocs, et ces blocs sont transférés en parallèle dans la mémoire image lorsqu'ils sont totalement remplis, ce qui permet d'alléger la charge en écriture de la mémoire image.

Le problème que se propose de résoudre l'invention est le dimensionnement et l'organisation d'une telle mémoire de blocs.

La présente invention a donc pour objet un procédé d'optimisation de la mémorisation des signaux vidéos dans un TDI, qui consiste à utiliser une mémoire de blocs :
- où les pixels seront inscrits au fur et à mesure que le signal vidéo radar est reçu et les coordonnées converties dans un repère cartésien ;
- dont la taille est très inférieure à la taille de la mémoire image, égale au minimum à 4N blocs si la mémoire image en contient $N^2$, les mêmes blocs étant ré-utilisés plusieurs fois lors d'un même tour d'antenne selon le processus suivant : les blocs de la mémoire de blocs sont regroupés en 2N paires, l'un des blocs d'une paire étant lu en parallèle à destination de la mémoire image pendant que l'autre bloc reçoit l'information incidente ; en outre, si on considère les losanges concentriques que forment l'ensemble des pavés de l'écran, les blocs d'une même paire sont affectés à un même losange de la façon suivante : à un instant donné, la radiale en cours de mémorisation traverse un pavé de rang i sur un losange donné ; l'information correspondante est écrite dans le premier des blocs de la paire affectée à ce losange ; pendant ce temps, le deuxième bloc de la paire est en lecture ; lorsque la lecture est terminée, ce deuxième bloc est disponible pour recevoir l'information qui sera mémorisée lorsque les radiales traverseront le pavé suivant, de rang i + 1, du même losange. A ce moment, le premier bloc sera lu, etc...

Plus précisément, l'invention a pour objet un procédé d'optimisation tel que défini par la revendication 1. Elle a également pour objet un TDI tel que défini par la revendication 11.

D'autres objets, particularités et résultats de l'invention ressortiront de la description suivante, donnée à titre d'exemple non limitatif et illustrée par les dessins annexés, qui représentent :

- la figure 1, le schéma synoptique d'un TDI ;
- la figure 2, le schéma synoptique d'un TDI comportant une mémoire de blocs ;
- la figure 3, un schéma explicatif de l'organisation de la mémoire de blocs selon l'invention ;
- la figure 4, un premier mode de réalisation du TDI selon l'invention ;
- la figure 5, un mode de réalisation d'un des éléments de la figure précédente ;
- la figure 6, un mode de réalisation d'un autre élément de la figure 4 ;
- la figure 7, un mode de réalisation du TDI selon l'invention comportant un ensemble de variantes susceptibles d'être mises en oeuvre indépendamment ;
- les figures 8a et 8b, deux schémas explicatifs relatifs à l'une des variantes de la figure 7 ;
- la figure 9, un diagramme explicatif relatif à la même variante ;
- la figure 10, un exemple de réalisation du découpage de la portée du radar en zones ;
- les figures 11a et 11b, deux diagrammes explicatifs relatifs à la même variante ;
- la figure 12, un mode de réalisation de l'un des éléments de la figure 7.

Sur ces différentes figures les mêmes références se rapportent aux mêmes éléments.

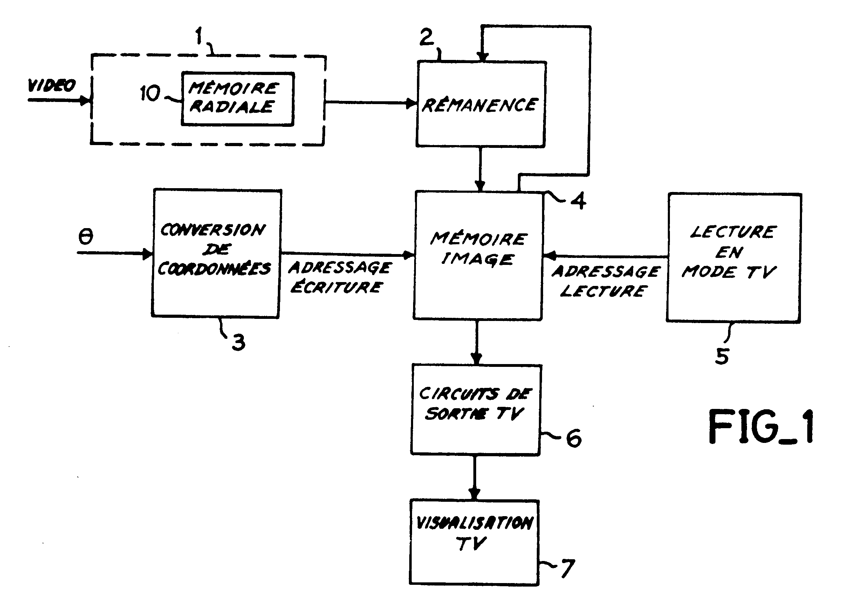

Le TDI représenté sur le synoptique de la figure 1 comporte principalement :

- un moniteur de télévision 7, sur lequel les informations radar sont visualisées ;
- une mémoire image 4, contenant sous forme numérique l'image qui sera affichée sur le moniteur 7 ;
- un ensemble 1 de circuits de traitement des signaux vidéos provenant du radar et reçus par le TDI ; cet ensemble comporte principalement un circuit d'échantillonnage (non représenté) du signal analogique reçu, qui assure sa conversion numérique, et une mémoire 10, dite mémoire radiale, qui contient successivement les différentes radiales ; en général, l'ensemble contient deux mémoires radiales travaillant alternativement en écriture et en lecture ; pour simplifier, on ne parlera globalement, dans la suite de la description, que de la mémoire 10 ; l'ensemble 1 peut comporter en outre des circuits de mélange de la vidéo radar incidente avec d'autres signaux à afficher sur l'écran 7 ;
- un ensemble 3 assurant la conversion des coordonnées polaires en coordonnées cartésiennes ; à cet effet, l'ensemble 3 reçoit la valeur de l'angle $\theta$ ; il assure l'adressage en écriture de la mémoire image 4, l'ensemble 1 fournissant, par l'intermédiaire d'un ensemble 2, l'information vidéo à inscrire en mémoire image 4 en synchronisme avec l'adressage ;
- un ensemble 2 de circuits de rémanence artificielle, qui a donc pour rôle de créer pour les informations numériques mémorisées dans la mémoire 4, pour lesquelles il n'existe pas de modifications dues au vieillissement, un effet de rémanence comparable à celui qui est produit sur un tube rémanent où la brillance d'un point commence à décroître dès qu'il est inscrit ;
- un ensemble 5 de circuits de lecture en mode télévision, assurant l'adressage en lecture de la mémoire image 4 ;
- un ensemble 6 de circuits de sortie en mode télévision, qui reçoit l'information contenue dans la mémoire image 4 telle qu'adressée par l'ensemble 5, en assure la conversion numérique-analogique pour engendrer un signal vidéo télévision destiné au moniteur 7, ainsi que la génération des signaux de synchronisation de télévision classiques.

Les ensembles de circuits représentés sur la figure 1 travaillent sous la commande et la synchronisation d'un circuit central de commande, non représenté, réalisé par exemple à l'aide d'un microprocesseur, qui reçoit à la fois les signaux de vidéo radar et les signaux de rotation de l'antenne.

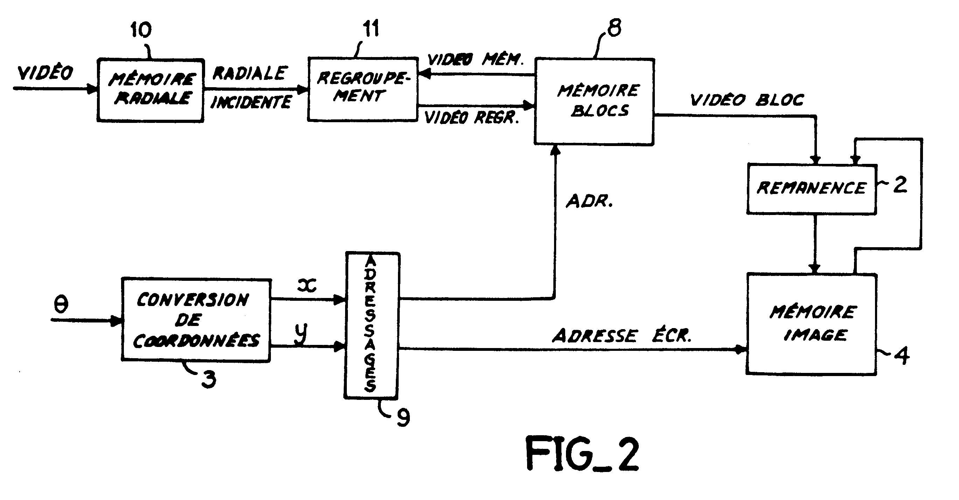

La figure 2 représente un schéma synoptique partiel d'un TDI comportant une mémoire de blocs.

Sur cette figure, on retrouve la mémoire radiale 10, l'ensemble de conversion de coordonnées 3, l'ensemble de rémanence 2 et la mémoire image 4 de la figure précédente.

Ce synoptique comporte de plus une mémoire de blocs 8, interposée entre la mémoire radiale 10 et l'ensemble de rémanence 2. Elle a pour fonction, ainsi qu'il est mentionné plus haut, de mémoriser la vidéo au fur et à mesure de sa réception et des conversions de coordonnées correspondantes, selon une structure telle, proche de celle de la mémoire image 4, que des blocs correspondant à des pavés de pixels adjacents puissent être transmis en parallèle à la mémoire image 4, via les circuits de rémanence 2.

Le TDI comporte alors également des circuits d'adressages 9 chargés d'élaborer, à partir des coordonnées x et y des points successifs des radiales, fournies par l'ensemble de conversion 3 :

- les adresses en écriture de la mémoire de blocs 8, c'est-à-dire déterminer le numéro du bloc qui se trouve en écriture ;
- les adresses en lecture de cette même mémoire de blocs ;
- l'adresse dans la mémoire image où doit être écrit le bloc qui est en lecture dans la mémoire de blocs.

En outre, ainsi qu'il a été mentionné ci-dessus, une des raisons de la surcharge en accès de la mémoire image vient du fait qu'un même pixel est adressé plusieurs fois lors d'un même tour d'antenne par plusieurs radiales successives, dans les zones proches du centre radar. Un des avantages de l'insertion de la mémoire de blocs 8 est de permettre d'éviter ces accès multiples à la mémoire image pour un même pixel ; cela est réalisé en opérant un regroupement au niveau de la mémoire de blocs des informations incidentes correspondant à un même pixel, et ce avant tout transfert à la mémoire image. Pour cela, les radiales incidentes, venant de la mémoire radiale 10, passent par un circuit de regroupement 11 avant d'atteindre la mémoire de blocs 8. Le circuit de regroupement 11, à réception de chacun des points de la radiale incidente, reçoit simultanément l'information éventuellement déjà stockée dans la mémoire de blocs pour le pixel considéré ; on effectue alors un regroupement de ces informations, incidente et déjà mémorisée, en général par une fonction maximum. C'est l'information vidéo regroupée qui sera inscrite dans la mémoire blocs en lieu et place de la radiale incidente.

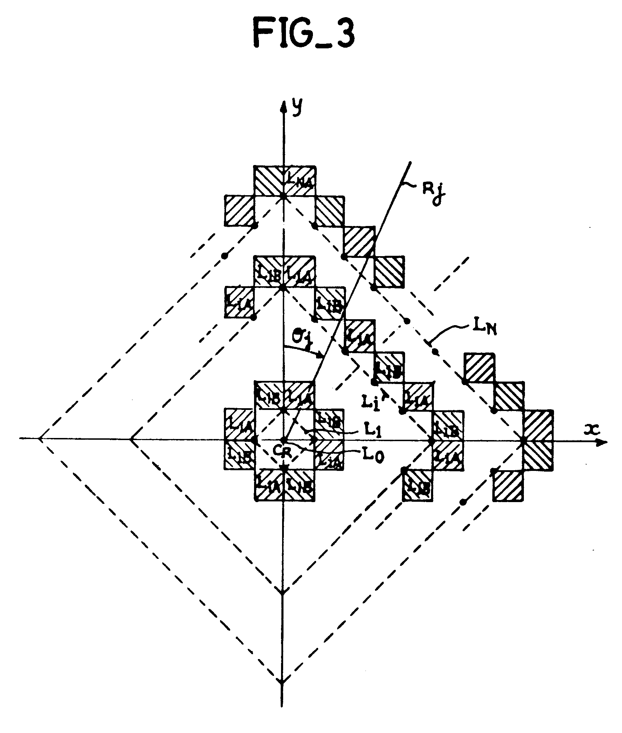

La figure 3 est un schéma expliquant la correspondance retenue entre les blocs de la mémoire de blocs 8 et les blocs de la mémoire image 4.

Sur la figure 3, on a représenté un repère orthonormé x y d'origine $C_R$, centre radar. A partir du centre radar, la zone couverte par le radar est divisée en pavés, ordonnés en lignes et colonnes et comportant chacun le même nombre de pixels. A titre d'exemple, la description ci-après sera faite dans le cadre de pavés carrés comportant $A^2$ pixels chacun. Ces pavés ont leurs côtés respectivement parallèles aux axes x et y. On suppose que l'écran télévision (7 sur la figure 1) comporte $(N.A)^2$ pixels, c'est-à-dire $N^2$ pavés. La mémoire image 4 devra donc avoir une capacité de $(N.A)^2$ mots de p bits chacun, si p est le nombre de bits affectés à chaque pixel. On rappelle également que la partie de la zone couverte par le radar qui est visualisée sur l'écran n'est pas forcément centrée sur le centre radar $C_R$.

On a fait apparaître en pointillés sur la figure 3 un ensemble de "losanges" repérés $L_0$, $L_1$...$L_i$...$L_N$..., de centre $C_R$, le premier $(L_0)$ étant confondu avec l'origine $C_R$. On peut considérer que les différents pavés de la figure 3 forment des losanges concentriques $L_0$... $L_N$, les différents pavés étant reliés à leur losange par l'un de leurs sommets. Les pavés sont repérés ci-après par le numéro du losange auquel ils appartiennent, affecté alternativement d'un indice A ou B pour les raisons exposées ci-après. Les pavés de pixels de l'écran correspondent à des blocs de bits en mémoire qui, pour simplifier, seront repérés par la même référence.

On a également représenté une radiale $R_j$ faisant avec l'axe y un angle $\theta_j$.

Ainsi qu'il a été dit ci-dessus, un bloc correspondant à un pavé traversé par une radiale $R_j$ (par exemple le pavé $L_{iB}$ repéré 31 sur la figure) ne doit être transféré à la mémoire image que lorsque les radiales ne traverseront plus ce pavé $L_{iB}$ ; cela est vérifié dès que l'angle $\theta_j$ atteint le pavé qui lui est adjacent, à 45° vers le bas à droite pour le premier quadrant par exemple, c'est-à-dire le pavé $L_{iA}$ (repéré 32 sur la figure) qui lui est adjacent sur le même losange $(L_i)$. En mémoire de blocs, la première inscription dans le bloc suivant $(L_{iA})$ pourra donc déclencher la lecture du bloc précédent $(L_{iB})$ d'un même losange $(L_i)$.

Par ailleurs, lorsque le contenu du bloc en lecture $(L_{iB}$ par exemple) est intégralement transféré à la mémoire image 4, ce dernier bloc peut être ré-utilisé pour un autre pavé. Le pavé choisi est précisément celui (repérés 33 sur la figure) dans lequel une écriture déclenche la lecture du bloc $L_{iA}$ (correspondant au pavé 32). Selon l'invention, les blocs de la mémoire de bloc sont donc regroupés en paires (indice A, indice B), chacune des paires étant affectée à un losange distinct $(L_i)$, l'un des blocs de la paire $(L_{iA}$ par exemple) étant lu en parallèle à destination de la mémoire image pendant que l'autre bloc $(L_{iB})$ reçoit l'information incidente, et les blocs étant alternativement utilisés pour reconstituer les différents pavés d'un même losange. Conventionnellement, pour un angle $\theta_j$ positif et voisin de zéro (l'origine des angles $\theta$ étant prise sur l'axe y), les blocs sont de type A. De la sorte, le type (A ou B) d'un bloc en écriture est uniquement fonction de x.

Le nombre maximum de losanges qui peuvent traverser un écran dont le côté est égal à N pavés, est égal à 2N-2. Ainsi qu'on l'a montré ci-dessus, la mémoire de blocs doit contenir deux blocs pour chacun des losanges, ce qui fait un nombre minimum de blocs, pour la mémoire de blocs, de 4N-4, qu'on peut arrondir à 4N.

Il apparaît que la taille de la mémoire de blocs est donc très inférieure à celle de la mémoire image ($N^2$ blocs).

En ce qui concerne la taille des pavés ($A^2$ pixels chacun), son choix est le résultat d'un compromis entre différents paramètres.

Tout d'abord, la taille de la mémoire de blocs, en pixels, est égale à $B = 4NxA^2$ ; si on désigne par E la dimension du côté de l'écran (toujours en pixels), on a $N = E/A$ d'où $B = 4EA$. La taille de la mémoire des blocs croit donc comme A, c'est-à-dire comme celle des pavés.

De plus, pour pouvoir transférer les $A^2$ pixels en parallèle de la mémoire de blocs à la mémoire image en un seul accès mémoire image, cette dernière doit en général comporter $A^2$ boîtiers adressables indépendamment.

Ces deux aspects conduisent à limiter la taille des pavés.

En outre, les blocs n'étant transmis à la mémoire image qu'une fois complètement remplis, il se produit un retard à la visualisation qui est fonction de la taille des pavés (il augmente avec la taille des pavés) et, à taille donnée, de la distance du pavé au centre radar (il est maximum vers le centre radar). Ce retard conduit également à limiter la taille des pavés. Toutefois, pour minimiser cette dernière limitation, deux solutions sont possibles. La première consiste à découper les blocs en sous-blocs et, dans les zones proches du centre radar, à appliquer le processus de lecture-écriture décrit plus haut aux sous-blocs et non plus aux blocs. La deuxième solution consiste à utiliser plusieurs mémoires de blocs distinctes, chacune ayant des blocs de taille différente et concernant une zone particulière de l'écran : la taille des blocs diminue vers le centre radar. Dans un but de simplicité, les zones sont alors formées de carrés emboîtés, centrés sur $C_R$. L'image finale est ensuite formée dans la mémoire image en employant le principe des médaillons, décrit plus loin. La deuxième solution est plus performante que la première, mais demande davantage de boîtiers de mémoire.

Au contraire, le nombre d'adresses des blocs étant égal à 4N et donc inversement proportionnel au côté (A) des pavés, pour limiter le nombre d'adresses, on est conduit à ne pas donner une trop petite taille à ceux-ci.

De plus, dans le même sens, des blocs de trop petite taille limitent les possibilités d'excentrement de la partie visualisée. En effet, des images très excentrées sont formées de portions de radiales très distantes les unes des autres ; or, un fonctionnement correct du processus décrit ci-dessus nécessite que tous les pavés soient traversés par au moins une radiale, ce qui n'est plus le cas lorsque la distance entre deux radiales, en x par exemple, devient trop grande par rapport au côté A du pavé, c'est-à-dire en pratique voisine de A.

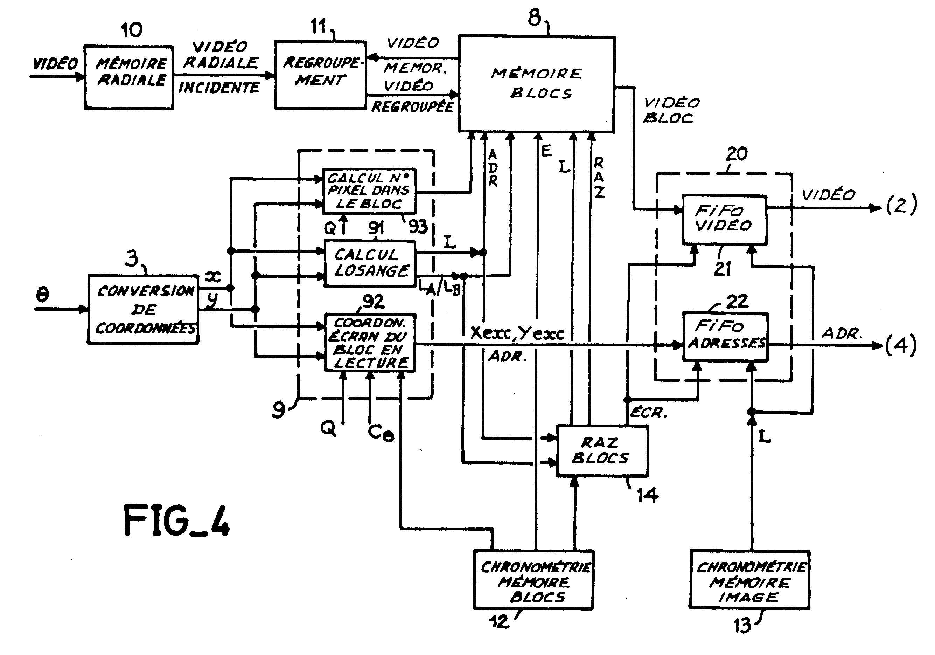

La figure 4 représente un mode de réalisation du TDI selon l'invention.

Sur cette figure, on retrouve des éléments de la figure 2, à savoir la mémoire radiale 10, le circuit de regroupement 11, la mémoire blocs 8, l'ensemble de conversion de coordonnées 3 et l'ensemble d'adressages 9.

Le synoptique de la figure 4 comporte en outre un ensemble de mémoires tampons du type FIFO (pour First In First Out en anglais), l'une (21) interposée sur le parcours de la vidéo entre la mémoire blocs 8 et les circuits de rémanence 2 et l'autre (22), sur le parcours des adresses entre l'ensemble 9 et la mémoire image 4.

En effet, ainsi qu'il l'a été mentionné plus haut, la mémoire image est lue selon des cycles imposés par l'affichage en mode télévision ; elle doit également subir des cycles de rafraîchissement et, dans le temps restant, elle peut admettre en écriture les blocs en provenance de la mémoire bloc. C'est donc la mémoire image qui impose le rythme de son écriture. Toutefois, l'organisation du procédé de mémorisation par blocs décrit ci-dessus ne tient pas compte des impératifs de la mémoire image. Il est donc nécessaire de disposer de mémoires tampons : conformément à ce qui est dit ci-dessus, lorsque l'écriture d'un bloc de la mémoire 8 est terminée, celui-ci est lu à destination de la mémoire FIFO 21 où il est mémorisé en attendant d'être transféré vers la mémoire image 4, via les circuits de rémanence 2, lorsque celle-ci est disponible. De même pour les adresses, élaborées selon un processus décrit ci-après.

L'ensemble d'adressages 9 comporte un premier circuit, repéré 91, qui assure l'adressage en écriture et lecture des blocs de la mémoire 8 à partir des coordonnées x et y fournies par l'ensemble de conversions de coordonnées 3. Comme on l'a vu ci-dessus (figure 3), la mémoire blocs 8 doit être constituée au minimum de deux parties distinctes (deux boîtiers), l'une contenant les blocs de type A et l'autre contenant les blocs de type B. Dans chacun de ces boîtiers, l'adresse d'un bloc est la même : elle est constituée par le numéro (L) du losange auquel il appartient. Ce numéro est donné par l'expression suivante :

$$L = X + Y$$

avec :

$$X = x/A$$
$$Y = y/A,$$

x et y étant les coordonnées d'un point exprimées par rapport au centre radar $C_R$ et A étant le nombre de pixels de chacun des côtés d'un bloc ; X et Y expriment donc les coordonnées d'un bloc par rapport à $C_R$, ou plus précisément les coordonnées d'un point caractéristique de ce bloc, dit point de base : celui de ses sommets qui est situé sur le losange auquel il appartient. Le circuit 91 assure donc le calcul de l'expression L.

Selon une variante de réalisation, étant donné que le nombre maximal de losanges traversant un écran carré de $N^2$ pavés est égal à 2N - 2, on peut exprimer l'adresse du pavé modulo 2N pour simplifier ; l'adresse en mémoire de bloc sera alors :

$$L = X + Y \ (\text{mod. } 2N)$$

Le circuit 91 fournit en outre un bit noté $L_A/L_B$ qui a pour valeur 1 par exemple lorsque le système procède à l'écriture dans un bloc de type A et pour valeur 0 lorsqu'il procède à l'écriture dans un bloc de type B. Ce bit est adressé notamment à la mémoire blocs 8, pour valider les ordres d'écriture et de lecture alternativement pour les boîtiers contenant les blocs de type A et de type B, respectivement.

L'ensemble 9 comporte encore un circuit 93, qui reçoit également les coordonnées x et y, ou seulement les bits de poids faible de celles-ci, et fournit l'adresse dans le bloc de chacun des pixels à mémoriser, à l'intention de la mémoire 8.

La transmission d'un bloc de la mémoire blocs 8 à la mémoire image 4, via les mémoires tampons 20, consiste en :
- la transmission de l'information vidéo de chacun des $A^2$ pixels du bloc ; la transmission s'effectue en parallèle et permet de bénéficier au niveau de la mémoire image de la structure organisée des blocs ;
- la transmission des coordonnées du bloc considéré dans l'écran TV ; ce calcul est fait par un circuit 92 de l'ensemble 9.

A cet effet, le circuit 92 reçoit les coordonnées x et y précédentes, ainsi que les coordonnées du centre de l'écran $C_e$ par rapport au centre radar $C_R$ et que l'information du quadrant auquel appartient le bloc en lecture. Le circuit 92 calcule alors les coordonnées $X_{exc}$, $Y_{exc}$ du bloc considéré dans l'écran, exprimées par rapport au centre écran $C_e$. A titre d'exemple, on a pour le premier quadrant :

$$X_{exc} = X_E - 1 - x_e$$
$$Y_{exc} = Y_E + 1 - y_e$$

avec $(X_E, Y_E)$ coordonnées du point de base du bloc en écriture par rapport au centre radar et $(x_e, y_e)$ coordonnées du centre écran $C_e$. On procède de façon analogue pour les autres quadrants. Au passage des axes de coordonnées, on a par exemple pour la partie positive de l'axe x :

$$X_{exc} = X_E - x_e$$
$$Y_{exc} = - y_e$$

De même pour le passage des autres axes de coordonnées.

Toutefois, ce qui précède, avantageux par sa simplicité, n'est possible que si on a tenu compte du quadrant pour inscrire la vidéo dans les blocs ; dans le cas contraire, une rotation des blocs à la lecture est nécessaire, avant transmission à la mémoire image. Dans un mode de réalisation préféré, on tient donc compte du quadrant pour inscrire la vidéo dans les blocs ; cela est fait au niveau du circuit 93, qui reçoit à cet effet l'information de quadrant Q.

Sur la figure 4, on a encore représenté un circuit 12 de chronométrie de la mémoire blocs 8, qui commande le calcul des coordonnées écran par le circuit 92, l'écriture et la lecture, alternativement, dans les deux boîtiers de la mémoire blocs 8, ainsi que l'écriture dans les mémoires FIFO 20, par l'intermédiaire d'un circuit 14 décrit ci-après.

Enfin, on a encore représenté sur la figure 4 un circuit 13 de chronométrie de la mémoire image qui, outre la commande écriture et lecture de la mémoire image, commande également la lecture des mémoires FIFO 20.

Les circuits de chronométrie 12 et 13 sont réalisés de façon classique, à l'aide d'horloges et de circuits logiques, et synchronisés par le microprocesseur assurant le contrôle de l'ensemble du TDI.

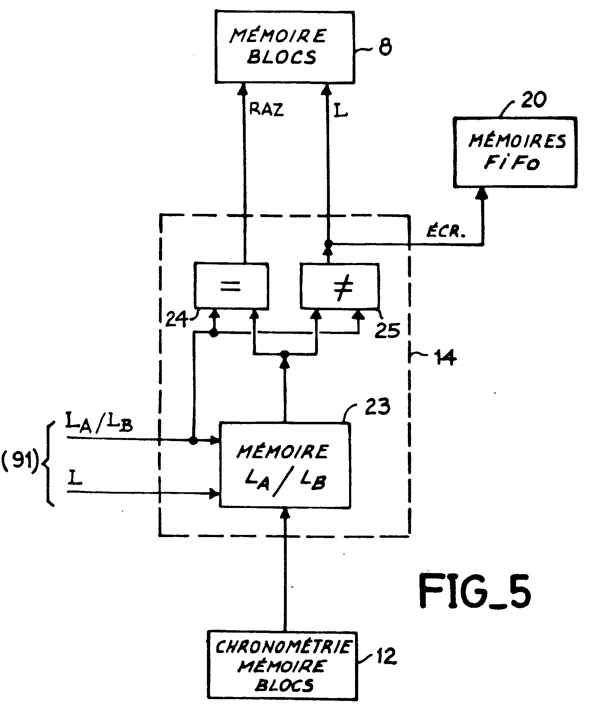

On a décrit ci-dessus le regroupement des signaux vidéos correspondant à un même pixel. Ce regroupement implique que la vidéo incidente soit comparée à la vidéo mémorisée dans la mémoire blocs 8 si, et seulement si, il ne s'agit pas de la première écriture relative au pixel considéré. S'il s'agit de la première écriture, celle-ci doit être faite directement, sans comparaison. A cet effet, deux solutions sont possibles : soit on mémorise le fait, pour chaque pixel, qu'une première écriture a été réalisée, ce qui nécessite des moyens de mémorisation ; soit on procède à la remise à zéro de chaque bloc après sa lecture. Cette dernière solution, schématisée par le bloc 14 de la figure 4 est décrite ci-après en relation avec la figure 5.

Le bloc 14 comporte une mémoire 23, adressée par le bloc 91 (adresse L) et qui contient le bit $L_A/L_B$, pour chacun des losanges ; ce bit lui est fourni également par le bloc 91 de la figure 4.

A chaque top fourni par le bloc de chronométrie 12, le contenu de la mémoire 23 pour le losange considéré est lu puis il y est inscrit la nouvelle valeur du bit $L_A/L_B$. La valeur incidente $L_A/L_B$ ainsi que la valeur mémorisée de ce même bit sont envoyées à deux circuits logiques 24 et 25. Lorsque ces deux bits sont différents, ce qui veut dire que la vidéo incidente est inscrite dans un nouveau bloc ($L_B$ par exemple), le circuit 25 envoie un signal de commande d'une part vers la mémoire de bloc 8 pour que le bloc correspondant à l'adresse L soit lu à destination des mémoires FIFO 20 et, d'autre part, à destination de ces mémoires 20 afin qu'elles admettent en écriture le contenu en cours de lecture de la mémoire 8. Au contraire, lorsque les bits $L_A/L_B$ sont égaux, ce qui veut dire que la vidéo incidente est toujours inscrite dans le même bloc ($L_A$ dans l'exemple précédent), la lecture du bloc $L_B$ ayant déjà été opérée, on procède à la remise à zéro du bloc $L_B$ ; à cet effet le circuit 24 délivre un signal de remise à zéro à destination de la mémoire de blocs 8.

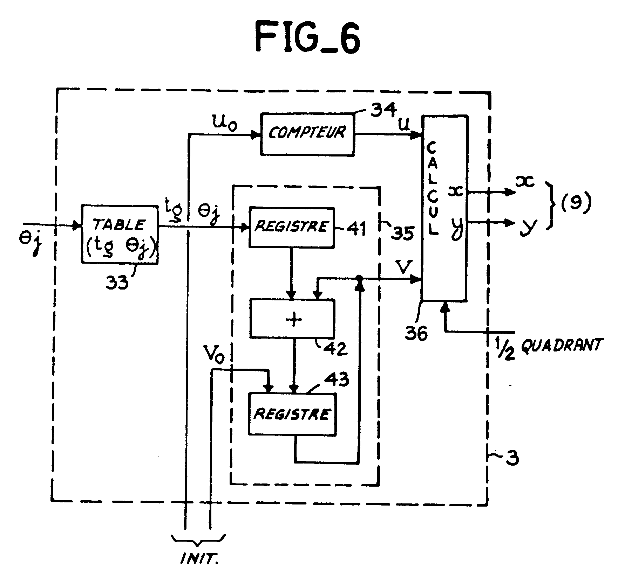

La figure 6 représente un mode de réalisation de l'ensemble de conversion de coordonnées 3 des figures précédentes.

Cet ensemble a donc pour fonction de fournir des coordonnées cartésiennes (x et y) à partir de l'angle $\theta_j$ que fait le faisceau radar avec la direction de référence (le Nord). Le principe utilisé est celui de l'accumulation : en partant par exemple du point le plus proche du centre radar $C_R$, dont les coordonnées sont fournies au bloc 3 (entrée "init."), on calcule successivement les coordonnées de chacun des points d'une même radiale.

Deux méthodes sont connues : l'accumulation en sinus-cosinus et l'accumulation en tangente. A titre d'exemple, on décrit ci-après l'accumulation en tangente. Dans ce cas, il faut distinguer selon que l'angle $\theta_j$ est inférieur ou supérieur à $\pi/4$ dans le premier quadrant, et symétriquement dans les autres :

- si $0 \leq \theta \leq 45°$, l'incrément en $\underline{y}$ entre $I_{i-1}$ et $I_i$ est pris égal à l'unité ; on a alors :

$$I_i \begin{cases} x_i = x_{i-1} + \text{tg } \theta \\ \\ y_i = y_{i-1} + 1 \end{cases} \tag{1}$$

- si $45° < \theta < 90°$, l'incrément en $\underline{x}$ entre $I_{i-1}$ et $I_i$ est pris égal à l'unité ; on a alors :

$$I_i \begin{cases} x_i = x_{i-1} + 1 \\ \\ y_i = y_{i-1} + \text{tg } (\frac{\pi}{2}-\theta) \end{cases} \tag{2}$$

A cet effet, l'ensemble 3 comporte :
- une table 33 des différentes valeurs des tangentes de chacun des angles $\theta_j$ définissant respectivement les radiales ; cette table est constituée de préférence par une mémoire, adressée par exemple les valeurs successives $(\theta_j)$ de l'angle $\theta$ ;
- un premier accumulateur 35, chargé d'élaborer la coordonnée à laquelle il faut faire subir une accumulation en tg $\theta$, c'est-à-dire x dans un demi-quadrant et $\underline{y}$ dans l'autre demi-quadrant d'un même quadrant, (cf. expressions (1) et (2) ci-dessus) ; cette coordonnée est notée V ; à cet effet, l'accumulateur 35 reçoit de la table précédente (33) la valeur tg $\theta_j$ ainsi que la valeur d'initialisation, c'est-à-dire la coordonnée (notée $V_o$) du premier point de la radiale visualisée ; l'accumulateur 35 est constitué par un additionneur 42 entouré d'un registre d'entrée 41, recevant pour chaque radiale la valeur de tg $\theta_j$, et d'un registre de sortie 43 ; ce dernier registre reçoit la coordonnée initiale $V_o$ ; sa sortie, d'une part, fournit la coordonnée V courante le long de la radiale pendant les accumulations et, d'autre part, est dirigée également vers l'additionneur 42 ;

- un deuxième accumulateur 34, chargé d'élaborer l'autre coordonnée, notée U, à laquelle il faut faire subir une accumulation égale à + 1, c'est-à-dire y dans le premier demi-quadrant et x dans le deuxième demi-quadrant du premier quadrant ; ce deuxième accumulateur peut être constitué simplement par un compteur, recevant comme valeur initiale la coordonnée ($U_o$) du premier point de la radiale; - un ensemble de circuits 36, recevant les coordonnées U et V élaborées par les accumulateurs 34 et 35, ainsi que l'information du demi-quadrant auquel appartient l'angle $\theta_j$ considéré, ce qui lui permet d'élaborer les coordonnées cartésiennes (x et y) des points de la radiale par rapport au centre radar $C_R$.

L'ensemble des circuits du bloc 3 représenté sur la figure 6 est, comme mentionné plus haut, commandé et synchronisé par le dispositif de commande du TDI, qui assure notamment les commandes d'accumulation et la fourniture des valeurs initiales.

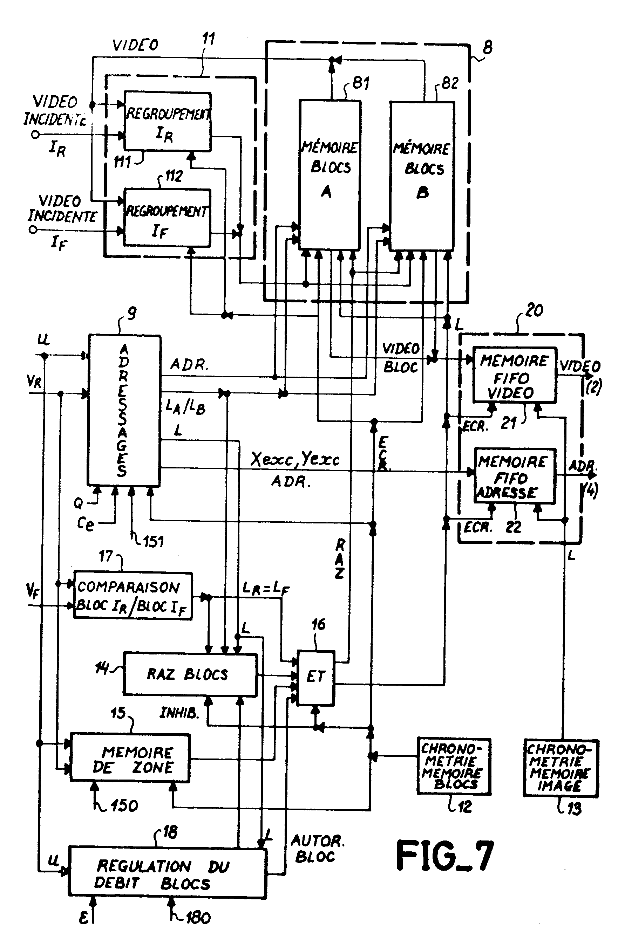

La figure 7 représente un schéma synoptique général du TDI selon l'invention, comportant par rapport à la figure 4 un certain nombre de variantes susceptibles d'être mises en oeuvre indépendamment les unes des autres.

Sur la figure 7, on retrouve les différents éléments de la figure 4, à savoir :

- l'ensemble de regroupement 11 ;
- la mémoire blocs 8, subdivisée en deux boîtiers, 81 et 82, contenant respectivement les blocs de type A et de type B ;
- l'ensemble 9 d'adressages ;
- l'ensemble 20 de mémoires FIFO ;
- les chronométries 12 et 13.

Il est à noter que les coordonnées reçues par l'ensemble 9 ne sont plus x et y mais U et V, l'élaboration des premières à partir des secondes étant ici intégrée à l'ensemble 9.

## FORMATION DE MEDAILLONS

Aux éléments précédents a été ajouté tout d'abord une mémoire 15, dite mémoire de zone.

Cette mémoire est utilisée dans le cas où l'on désire former des "médaillons" sur l'écran. On rappelle qu'on entend par "médaillon" une partie de la zone de couverture du radar, appartenant ou n'appartenant pas à l'image visualisée sur l'écran, qui est agrandie par rapport à cette image ; cette possibilité est par exemple utilisée lorsque l'opérateur souhaite examiner un détail particulier.

La mémoire de zone 15 reçoit les coordonnées du bloc en écriture, ainsi que l'indication d'appartenance ou non appartenance à l'image à visualiser du bloc qui se trouve en lecture (flèche 150 en provenance du dispositif de commande du TDI).

En outre, un circuit ET 16 est interposé sur la commande de lecture de la mémoire blocs 8 et d'écriture des mémoires FIFO 20, commande en provenance du bloc de chronométrie 12. Une entrée de cette porte ET 16 est reliée à la sortie de la mémoire de zone 15 ; de la sorte, un bloc susceptible d'être lu dans la mémoire blocs ne peut effectivement l'être, à destination des mémoires FIFO, que s'il est reconnu par la mémoire de zone 15 comme devant appartenir à l'image finalement visualisée.

Enfin, pour former un maximum de m médaillons sur l'écran, il est nécessaire de disposer de m circuits supplémentaires tels que le circuit 92, leur commutation étant également assurée par le dispositif de contrôle du TDI (flèche 151).

Il est à noter qu'une mémoire de zone est nécessaire, même en l'absence de médaillon, lorsque l'image visualisée sur l'écran ne constitue qu'une partie de la zone couverte par le radar, pour pouvoir déterminer de même si un bloc susceptible d'être lu en mémoire blocs doit appartenir ou non à l'image formée sur l'écran.

## HOMOGENEISATION DE L'IMAGE

Le schéma de la figure 7 a également été modifié par rapport au schéma de la figure 4 pour permettre l'homogénéisation de l'image par remplissage (également appelée dans la littérature anglo-saxonne "pixel filling").

On rappelle que lorsque le processus de conversion de coordonnées et/ou de visualisation est quantifié, comme c'est le cas pour un TDI, il peut arriver que la conversion fasse apparaître des tâches sombres au milieu d'une zone lumineuse, notamment dans les parties éloignées du centre radar. Cet aspect "mité" de l'image est corrigé en "remplissant" les tâches sombres, c'est-à-dire en leur affectant une luminosité non nulle.

Selon l'invention, on réalise ce remplissage au niveau de la vidéo reçue en coordonnées polaires, en créant des radiales fictives entre les radiales réelles et en leur affectant un chacun un signal vidéo fonction du signal vidéo des radiales réelles voisines et, de préférence, le signal vidéo des points des radiales réelles voisines qui sont situées au même module que le point fictif. Ces radiales fictives sont ensuite converties en coordonnées cartésiennes et viennent remplir les pixels précédemment non atteints.

Outre des circuits spécifiques à la génération des radiales fictives et à leur conversion, une telle fonction de remplissage nécessite par rapport au schéma de la figure 4 tout d'abord un dédoublement de la fonction de regroupement 11. On a représenté sur la figure 7, à l'intérieur de l'ensemble 11, un premier bloc 111 qui est affecté au regroupement de la vidéo réelle ($I_R$) et un second bloc 112 qui reçoit d'une part, comme le bloc précédent, la vidéo mémorisée dans la mémoire blocs 8 mais qui reçoit, d'autre part, non plus la vidéo réelle incidente mais la vidéo élaborée par la fonction de remplissage, notée $I_F$. La vidéo regroupée, qu'elle provienne des radiales réelles ou des radiales fictives de remplissage, est dirigée comme précédemment pour mémorisation vers la mémoire blocs 8.

Toutefois, afin de permettre le traitement simultané des radiales réelles et des radiales fictives, les signaux vidéos à écrire devant, à un instant donné, se trouver dans des boîtiers différents, on peut être amené à subdiviser la mémoire blocs 8 en une pluralité de boîtiers de contenance moindre, organisés en diagonale.

Par ailleurs, un bloc ne doit être transféré à la mémoire image, via les mémoires FIFO, que si les radiales réelles et les radiales fictives de remplissage l'ont quitté. Cette vérification est réalisée par un circuit de comparaison 17, qui reçoit les coordonnées élaborées par le système de conversion de coordonnées pour les différentes radiales réelles et fictives et qui fournit ou non une autorisation de transfert au circuit ET 16, en fonction du résultat de la comparaison. Plus précisément, dans le cas où on calcule les coordonnées par la méthode d'accumulation en tangente décrite ci-dessus, on constate que la radiale réelle et la radiale fictive ont une coordonnée identique : la coordonnée U, qui est indépendante de l'angle polaire $\theta$. Il suffit alors de comparer entre elles les coordonnées $V_R$ de la radiale réelle et $V_F$ de la radiale fictive et, plus précisément, l'un des bits de cette coordonnée, pour savoir si les deux points considérés appartiennent ou non à un même bloc ; c'est ce qui est fait par le circuit 17, qui est un circuit logique ; le résultat de la comparaison est noté $L_R = L_F$.

Cette information $L_R = L_F$ est également transmise à l'ensemble 14 de remise à zéro des blocs de la mémoire 8 afin d'inhiber l'écriture de l'information $L_A/L_B$ en mémoire 23 lorsque les radiales $I_F$ et $I_R$ n'appartiennent pas au même pavé. En effet, dans ce cas, la lecture du bloc en mémoire 8 a été inhibée et il faut inhiber corrélativement la remise à zéro du bloc concerné.

L'avantage de cette configuration est la légèreté de mise en oeuvre de la fonction remplissage qui, en particulier, n'augmente pas le nombre de blocs à transmettre à la mémoire image, bien que le nombre de radiales soit augmenté.

Ce qui est décrit ci-dessus est nécessaire dans le cas où on désire réaliser un remplissage "synchrone", c'est-à-dire lorsque les radiales réelles et les radiales fictives sont transmises simultanément à la mémoire image.

Au contraire, lorsque les radiales, réelles ou fictives, sont envoyées les unes après les autres à la mémoire image (remplissage "asynchrone"), le dédoublement de la fonction de regroupement (11) et le circuit de comparaison (17) ne sont pas nécessaires.

REGULARISATION DU DEBIT DES BLOCS

Le débit de sortie des blocs de la mémoire de blocs vers la mémoire image, éventuellement via les mémoires tampons de type FIFO 20, est très inégal d'une radiale à l'autre. Par exemple, lorsque l'angle $\theta$ est voisin de 90°, la radiale qui suit l'axe x déclenche la lecture de tous les blocs situés de l'autre côté de cet axe, alors que les radiales suivantes n'atteindront pas de nouveaux blocs et n'entraineront donc pas de lecture. Le problème est similaire à 45° et peut exister pour d'autres angles remarquables.

Le débit d'informations maximum en entrée de la mémoire image étant fixe, les pointes de débit en sortie de la mémoire de blocs conduisent donc soit à un surdimensionnement important des mémoires FIFO, soit à une mémoire image à hautes performances qui permet d'absorber ces pointes.

Selon l'invention, le débit de blocs entre mémoire de blocs et mémoires FIFO est régulé en introduisant une condition supplémentaire à l'autorisation de lecture de la mémoire de blocs : cette condition consiste à interdire la lecture de certains blocs sur certaines radiales.

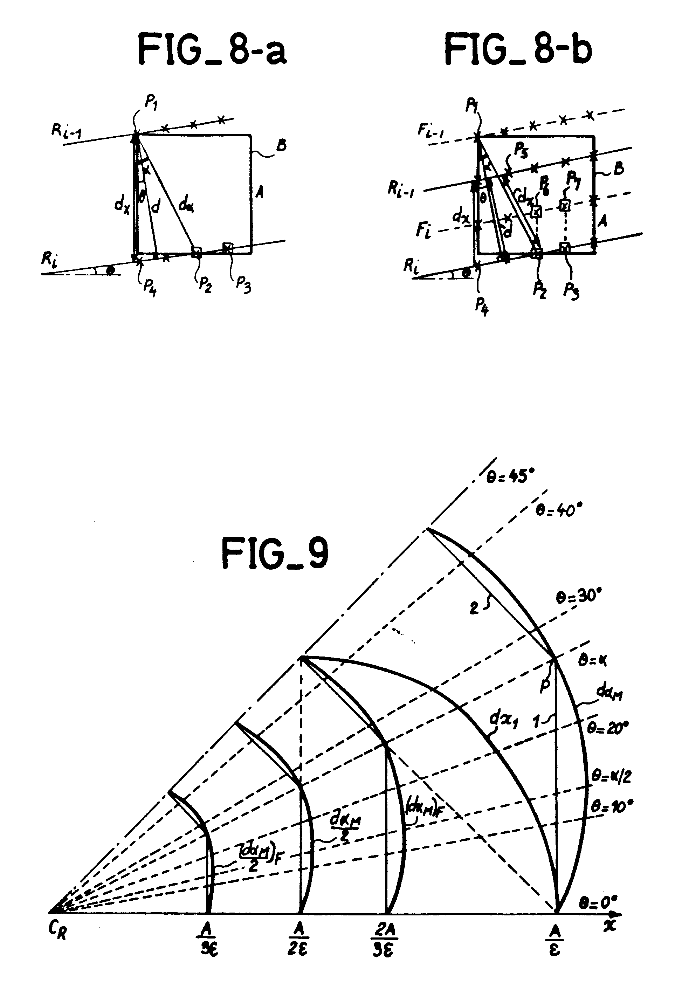

Selon le procédé décrit plus haut, il est nécessaire de disposer de deux écritures successives dans un même bloc pour que soient assurées successivement la lecture de l'autre bloc de la paire considérée, puis sa remise à zéro. Le fait d'avoir un minimum de deux écritures dans un bloc donné conduit à l'existence d'un nombre minimum de radiales traversant le pavé de pixels correspondant et, par suite, à une distance minimum entre deux radiales. Ces différents minima sont illustrés sur les figures 8a et 8b.

Sur la figure 8a, on a donc représenté un pavé B et deux radiales successives, repérées $R_{i-1}$ et $R_i$ ; le pavé B est traversé par la seule radiale $R_i$. Sur chacune de ces radiales ont été représentés un certain nombre de points atteints par la conversion, dont un point $P_1$, appartenant à la radiale $R_{i-1}$, qui est le point le plus proche du pavé B mais extérieur à ce dernier et des points $P_2$ et $P_3$, appartenant à la radiale $R_i$, qui sont les seuls à appartenir au pavé B. La figure 8a représente donc le cas minimum.

Sur cette figure, on a également repéré par $\theta$ l'angle que fait la radiale $R_i$ avec l'axe x, $\alpha$ l'angle que fait le segment $P_1P_2$ avec l'axe y, $d\alpha$ la longueur du segment $P_1P_2$, c'est-à-dire la longueur du segment pris selon l'angle $\alpha$ qui sépare deux radiales, d la distance entre les radiales $R_{i-1}$ et $R_i$ et dx la distance, exprimée en nombre de points, séparant deux points de même abscisse pour deux radiales successives, en l'occurrence le point $P_1$ d'un point $P_4$ de la radiale $R_i$. Si on désigne par A le côté du pavé B, exprimé en points, on peut exprimer une valeur maximale $d\alpha_M$ de $d\alpha$ qui peut séparer les points de deux radiales successives pour que deux points au moins tombent dans le même pavé B :

$$d\alpha_M = \frac{A}{\cos \alpha} \qquad (11)$$

L'angle $\alpha$ est donc défini par la taille des blocs et par le nombre de points minimum dans un même pavé pour que la lecture du bloc correspondant soit possible.

Dans le cas particulier où A = 4 points et où le nombre minimum de points est 2, $\alpha$ est tel que : tg $\alpha$ = 0,5.

En se reportant à la figure 8a, on exprime la distance $d\alpha$ par:

$$d\alpha = \frac{d}{\cos(\theta - \alpha)}$$

$$\text{or : } d = \rho \cdot \varepsilon = \frac{x}{\cos \theta} \cdot \varepsilon \qquad (12)$$

où $\epsilon$ est l'angle fait entre deux radiales successives

$$\text{d'où} \quad d\alpha = \frac{x \cdot \varepsilon}{\cos \theta \cdot \cos(\theta - \alpha)} \qquad (13)$$

La distance $d\alpha$ doit donc être inférieure à la distance limite $d\alpha_M$.

Toutefois, si $d\alpha$ est inférieur à $d\alpha_M/2$, il apparaît que la lecture des blocs serait possible avec moitié moins de radiales. Selon l'invention, on lit donc un premier groupe de blocs disponibles en lecture dans un premier temps puis un deuxième groupe formé des blocs restants dans un second temps. En pratique, on interdit la lecture de certains blocs sur la moitié des radiales qui le traversent, par exemple la moitié impaire : ils ne seront donc transférés et remis à zéro que sur les radiales paires; parallèlement, on interdit la lecture des autres blocs sur les radiales paires pour ne l'autoriser que sur les radiales impaires. De préférence, la répartition des blocs à lire entre radiales paires et radiales impaires est voisine ou égale. Ce type de zone où $d\alpha$ est inférieur à $d\alpha_M/2$ est appelé zone 2.

La zone où la distance $d\alpha$ est comprise entre $d\alpha_M$ et $d\alpha_M/2$ est appelée zone 1.

Plus généralement, si $d\alpha$ est inférieur à $d\alpha_M/N$, la lecture des blocs serait possible avec N fois moins de radiales : on ne procédera alors à la lecture que de $1/N^{\text{ième}}$ des blocs disponibles sur chacune des radiales. La zone correspondante est appelée zone N.

On obtient ainsi des zones de rang i (avec $1 \leq i \leq N$) où une radiale sur i seulement déclenche la lecture d'un bloc donné. Le nombre de blocs transmissibles à la mémoire FIFO par radiale devient alors, pour la zone i :

$$B_i = \frac{B_A}{i} \cdot \left[ X_i^S - X_i^I \right]$$

où $X_i^S$ et $X_i^I$ sont les abscisses limites exprimées en pixels ($X = x/A$), respectivement supérieure et inférieure, de la zone i et $B_A$ est le nombre maximum de blocs susceptibles d'êtres lus en A écritures.

Le nombre $B_A$ dépend de la distance dx, laquelle est donnée par:

$$dx = \frac{d}{\cos \theta}$$

En remplaçant d par son expression (12) ci-dessus, on a :

$$dx = \frac{x \cdot \epsilon}{\cos^2 \theta} \qquad\qquad (14)$$

On montre que, pour un calcul de coordonnées par la méthode des accumulations en tangente, $B_A = 1$ si dx < A et $B_A = 2$ si dx $\geq$ A.

Plus généralement, pour la zone de rang i, la valeur critique de la distance dx devient A/i, ce qui donne:

. pour dx $< \frac{A}{i}$, $B_A = 1$

. pour dx $\geq \frac{A}{i}$, $B_A = 2$

Pour chaque radiale de chaque image, le débit maximal en sortie de la mémoire blocs, en nombre de blocs par radiale, est donné par :

$$C = \text{MAX} \left\{ \sum_i \left[ \frac{1}{i} \cdot (X_{i1}^S - X_{i1}^I) + \frac{2}{i} \cdot (X_{i2}^S - X_{i2}^I) \right] \right\}$$

où:

- MAX signifie que pour déterminer C, on calcule la valeur entre accolades pour chacune des radiales et on retient pour C le maximum des valeurs ainsi obtenues;
- i est le rang de la zone;
- $X_{i1}^S$ est l'abscisse (exprimée en pixels) supérieure de la zone i avec $B_A = 1$ ;
- $X_{i1}^I$ est l'abscisse (exprimée en pixels) inférieure de la zone i avec $B_A = 1$ ;
- $X_{i2}^S$ est l'abscisse (exprimée en pixels) supérieure de la zone i avec $B_A = 2$ ;
- $X_{i2}^I$ est l'abscisse (exprimée en pixels) inférieure de la zone i avec $B_A = 2$.

La connaissance de cette valeur maximale C permet un dimensionnement optimisé des circuits et des bus d'interconnexion.

La figure 8b est analogue à la figure 8a, mais dans le cas où on opère une homogénéisation de l'image par remplissage, ou "pixel filling" décrite plus haut.

Le remplissage illustré sur la figure 8b est synchrone de rang 2, c'est-à-dire qu'il est créé une radiale fictive de remplissage ($F_{i-1}$, $F_i$) entre deux radiales réelles consécutives ($R_{i-1}$, $R_i$).

Dans ce cas, il est nécessaire que deux points ($P_2$ et $P_3$) d'une radiale réelle ($R_i$) appartiennent au pavé B en même temps que deux points $P_6$ et $P_7$ de la radiale fictive correspondante ($F_i$).

Le cas minimum est représenté sur la figure 8b où la radiale possèdant le point ($P_1$) le plus proche du pavé B, mais extérieur à celui-ci, est une radiale fictive de rang précédent ($F_{i-1}$).

Il apparaît que la distance dα est ici les 2/3 de ce qu'elle est dans le cas de la figure 8a et, de même, la valeur maximale $(d\alpha_M)_F$ dans le cas de radiales de remplissage est donnée par :

$$(d\alpha_M)_F = \frac{2}{3} \cdot d\alpha_M$$

$$= \frac{2}{3} \cdot \frac{A}{\cos \alpha} \qquad (15)$$

Les valeurs de $B_A$ ne sont pas modifiées par l'existence de radiales fictives de remplissage.

La figure 9 représente la zone 1, avec et sans remplissage, ainsi que la limite des sous-zones $B_A = 1$ et $B_A = 2$, en coordonnées cartésiennes (x, y), l'angle $\theta$ étant indiqué en paramètre et l'origine des $\underline{x}$ étant le centre radar $C_R$.

On a représenté sur ce diagramme une première courbe $dx_1$, correspondant à dx = A, valeur pour laquelle le nombre $B_A$ passe de 1 à 2, pour la zone 1.

On a représenté une deuxième courbe repérée $d\alpha_M$, qui représente la variation de l'expression (13) ci-dessus dans le cas où $d\alpha = d\alpha_M$ (expression (11)), valeur limite après laquelle le procédé décrit ne fonctionne plus.

On a représenté une troisième courbe, repérée $d\alpha_M/2$, qui illustre la valeur délimitant les zones 1 et 2.

La zone 1 est donc comprise entre les courbes $d\alpha_M$ et $d\alpha_M/2$ en l'absence de radiales fictives de remplissage, avec un débit passant du simple au double lorsqu'on franchit la courbe $dx_1$ (dans le sens des x croissants).

On a représenté enfin sur la figure 9 deux courbes, repérées respectivement $(d\alpha_M)_F$, qui est la valeur limite dans le cas où il existe des radiales de remplissage, et $(d\alpha_M)_F/2$ qui représente la valeur délimitant les zones 1 et 2 dans ce cas.

Il est à noter que, si on considère par exemple la courbe $d\alpha_M$, il existe un point particulier P de cette courbe, pour $\theta = \alpha$, qui :
- se situe à la même abscisse que pour $\theta = 0$, comme le montre l'expression (13) ci-dessus (segment 1) ;
- se situe sur le même losange que pour $\theta = 45°$ (segment 2).

En conséquence, pour engendrer les limites de zones 1, 2...i...N pour la lecture des blocs, on utilise une approximation analgue à celle de la courbe $d\alpha_M$ par les segments 1 et 2 :
- segment 1 défini par $x = C^{te} = A/\epsilon$ pour $0 \leq \theta \leq \alpha$ ;
- segment 2 défini par un numéro de losange (L = X + Y avec les notations précédentes) pour $\alpha \leq \theta \leq 45°$.

Cette approximation présente en outre l'avantage de se situer en deça de la courbe et d'en rester proche. On a alors, pour la limite de la zone i:
- pour $0 \leq \theta \leq \alpha : x = \frac{1}{i} \cdot \frac{A}{\epsilon}$ ;
- pour $\alpha \leq \theta \leq 45°$ : numéro de losange ; on a indiqué plus haut que le numéro de losange L était donné par :

$$L = X + Y$$

avec :

$$X = x/A$$
$$Y = y/A = X.tg\ \theta$$

Pour la limite de la zone i, on obtient:

$$L = \frac{2}{3} \cdot \frac{1}{i} \cdot \frac{1}{\epsilon}$$

La définition des segments analogues aux segments 1 et 2 est obtenue par symétries pour les autres valeurs de $\theta$.

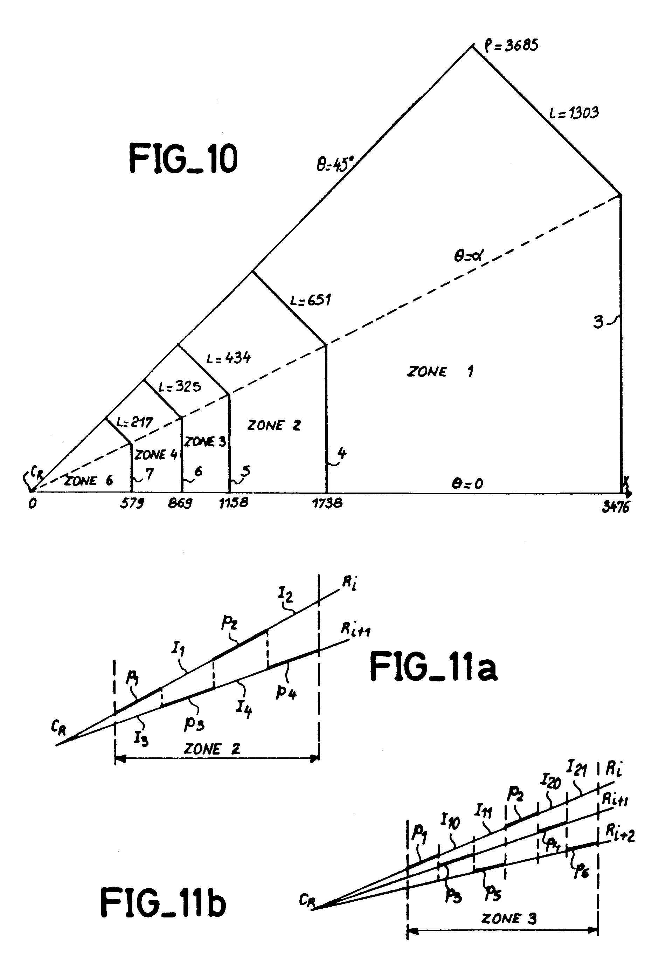

La figure 10 illustre un exemple de découpage de la portée du radar en cinq zones, avec i = 1, 2, 3, 4 et 6, et l'application numérique suivante :
- 8192 radiales réelles ;
- une image formées de 1024 lignes de 1024 pixels chacune ;
- des pavés carrés de A = 4 pixels de côté avec tg $\alpha = 0,5$ ;

- création de radiales fictives pour un remplissage de range 2.

Les différentes zones sont limitées par des courbes, repérées 3 à 7, correspondant comme exposé ci-dessus à l'approximation des valeurs de $d\alpha$ suivantes :

$$-\frac{4}{\cos \alpha} \text{, qui est la valeur } d\alpha_M ;$$

$$-\frac{2}{\cos \alpha} \text{, qui est la valeur } d\alpha_M/2, \text{ délimitant la zone 2 ;}$$

$$-\frac{4}{3.\cos \alpha} \text{, qui est la valeur } d\alpha_M/3, \text{ délimitant la zone 3 ;}$$

$$-\frac{1}{\cos \alpha} \text{, qui est la valeur } d\alpha_M/4, \text{ délimitant la zone 4 ;}$$

$$-\frac{2}{3. \cos \alpha}, \text{ qui est la valeur } d\alpha_M/6, \text{ délimitant la zone 6.}$$

On a illustré figure 10 cinq zones mais ce nombre peut être plus petit ou plus grand, la seule limite pratique à son accroissement étant le fait que les radiales sont comptées modulo le PPCM des numéros de zones pour le déclenchement de la lecture des blocs associés.

On a également porté sur cette figure l'abscisse X, exprimée en nombre de pixels, de ces différents courbes à $\theta = 0$ ainsi que le numéro du losange correspondant.

Les figures 11a et 11b illustrent le mode de lecture des blocs dans deux cas donnés à titre d'exemple.

On a représenté figure 11a la lecture des blocs d'une zone 2 sur deux radiales successives, $R_i$ et $R_{i+1}$.

Sur une même radiale, $R_i$ par exemple, la lecture du (ou des) bloc(s) correspondant à une partie $p_1$ (en traits forts) de cette radiale est autorisée alors qu'une partie suivante, notée $I_1$ est interdite. Symétriquement, la lecture des blocs disponible à la lecture est interdite pendant une partie $I_3$ de la radiale suivante $R_{i+1}$, la partie $I_3$ correspondant à la partie $p_1$; de même, cette lecture est autorisée pendant une partie $p_3$ de la radiale $R_{i+1}$, correspondant à la partie $I_1$.

On a de la même manière représenté une alternance de parties permise ($p_2$) et interdite ($I_2$) pour la radiale $R_i$, correspondant aux parties respectivement interdite ($I_4$) et permise ($p_4$) de la radiale $R_{i+1}$.

De la sorte, les blocs de la zone 2 sont tous lus mais leur lecture est répartie sur deux radiales.

En outre, ainsi qu'il a été dit ci-dessus, les parties permises et interdites sont de préférence égales et alternées au maximum; leur longueur peut être de quelques pavés ou même, de préférence, d'un seul pavé.

La figure 11b représente, de façon analogue, la lecture des blocs d'une zone 3 sur trois radiales successives, $R_i$, $R_{i+1}$, $R_{i+2}$.

Les parties où la lecture est permise sont repérés $p_1$ à $p_6$ et sont réparties successivement sur les trois radiales, les autres parties ($I_{10}$, $I_{11}$, $I_{20}$ et $I_{21}$ pour la radiale $R_i$) étant interdites.

La figure 7 comporte encore un circuit 18 asurant la régulation du débit des blocs.

Pour ce faire, le circuit 18 reçoit les coordonnés U, le numéro de losange (L) élaboré par l'ensemble d'adressages 9 et l'incrément d'angle $\epsilon$ , en provenance du dispositif de commande du TDI.

Le circuit 18 détermine les limites des zones comme indiqué plus haut à partir du numéro de losange et de l'abscisse x et, suivant la position du bloc considéré dans une zone déterminée, autorise (ou non) sa lecture par un signal (AUTOR. BLOC) envoyé à la porte ET 16.

Dans le cas où la lecture d'un bloc n'est pas autorisée, le circuit 18 empêche sa remise à zéro par envoi d'un signal d'inhibition (INHIB.) au circuit 14 de remise à zéro des blocs.

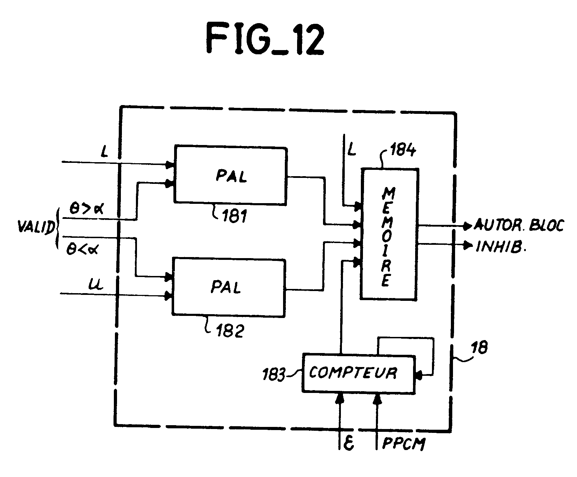

La figure 12 représente un mode de réalisation du bloc 18 de la figure 7. Il comporte:

- un premier circuit logique 181, par exemple du type PAL (pour "Programmable Array Logic" ou réseau logique programmable), recevant le numéro de losange L et fournissant la limite de zone pour $\theta > \alpha$, c'est-à-dire le segment 2 mentionné plus haut; le circuit 181 reçoit en outre un signal de validation (VALID.) lorsque l'angle $\theta$ est supérieur à $\alpha$, provenant du dispositif de commande du TDI;
- un deuxième circuit logique 182, par exemple également du type PAL, recevant la coordonnée U et fournissant la limite de zone pour $\theta < \alpha$, c'est-à-dire le segment 1; le circuit 182 reçoit également un signal de validation du dispositif de commande du TDI, mais lorsque l'angle $\theta$ est inférieur à $\alpha$;
- un compteur 183, rebouclé sur lui-même, recevant l'incrément d'angle $\epsilon$ et la valeur du PPCM fournis par le dispositif de commande du TDI, et fournissant le numéro de chaque radial module le PPCM;

- une mémoire 184, par exemple du type PROM, recevant les gradeurs fournies par les blocs précédents (181, 182 et 183) ainsi que le numéro de losange de chacun des pavés.

Selon que le pavé considéré appartient ou non à une zone et une radiale tels que le bloc correspondent puisse être lu, la mémoire 184 fournit un signal d'autorisation de lecture à la porte ET 16 (figure 7) ou un signal d'inhibition de remise à zéro au bloc 14 (figure 7).

Les signaux provenant du dispositif de commande du TDI (VALID.; PPCM) sont schématisés par une commande 180 sur la figure 7.

**Revendications**

1.  Procédé d'optimisation de la mémorisation de signaux vidéos dans un transformateur numérique d'images, les signaux vidéos étant fournis en coordonnées polaires sous forme d'une succession de radiales, ayant pour origine le centre radar ($C_R$) et formant une image, le transformateur comportant :
    - un écran (7) à balayage télévision, sur lequel sont visualisés au moins partiellement les signaux vidéos ;
    - au moins une mémoire radiale (10), mémorisant successivement les radiales ;
    - un ensemble (3) de circuits assurant la conversion de coordonnées polaires en coordonnées cartésiennes ;
    - une mémoire image (4), contenant les signaux vidéos numérisés selon une organisation qui est identique à celle de l'écran (7) ;
    - une mémoire de blocs (8), devisée en blocs, interposée entre la mémoire radiale (10) et la mémoire image (4), organisée comme la mémoire image (4), chacun des blocs correspondant à un pavé de points adjacents sur l'écran,
    - les signaux vidéos étant transmis de la mémoire radiale (10) à la mémoire de blocs (8) au fur et à mesure que les coordonnées de chacun des points de la radiale considérée sont converties en coordonnées cartésiennes par l'ensemble de conversion (3) ;
    le procédé étant caractérisé par le fait:
    - que les blocs étant regroupés en paires (type A, type B), l'un des blocs d'une même paire est lu en parallèle à destination de la mémoire image (4) pendant que l'autre bloc reçoit en écriture les signaux vidéos en provenance de la mémoire radiale (10) ;
    - que, si on considère les losanges ($L_i$) concentriques, ayant pour centre le centre radar ($C_R$), auxquels sont reliés les pavés de l'écran par l'un de leurs sommets, chaque paire de blocs est affectée à un seul losange,
    - et que la première écriture dans un bloc déclenche la lecture du deuxième bloc de la même paire.

2.  Procédé selon la revendication 1, caractérisé par le fait que la deuxième écriture dans un même bloc déclenche la remise à zéro du deuxième bloc de la paire.

3.  Procédé selon l'une des revendications précédentes, caractérisé par le fait que, préalablement à l'écriture d'un point dans un bloc de la mémoire de blocs (8), le contenu de cette mémoire (8) pour le point considéré est lu, l'information inscrite en mémoire de blocs résultant alors du regroupement (11) de l'information précédemment lue et de l'information provenant de la mémoire radiale (10).

4.  Procédé selon la revendication 3, caractérisé par le fait que la fonction appliquée lors du regroupement (11) est une fonction maximum.

5.  Procédé selon l'une des revendications précédentes, caractérisé par le fait que l'adresse d'un bloc en mémoire de blocs (8) est constituée par le numéro d'ordre L du losange auquel il appartient, ce numéro étant formé à partir des coordonnées (x, y) de l'un des sommets du bloc de la façon suivante :

$$L = X + Y$$

avec :

$$X = x/A$$
$$Y = y/A$$

où A est le nombre de points par côté de pavé.

**6.** Procédé selon la revendication 2, caractérisé par le fait que pour les zones de l'image pour lesquelles un pavé comporte au moins deux radiales, comportant chacune au moins deux points à l'intérieur dudit pavé, on procède à la répartition de la lecture des blocs par inhibition de la lecture de certains blocs lors de certaines écritures.

**7.** Procédé selon la revendication 6, caractérisé par le fait que l'inhibition de la lecture de certains blocs est réalisée en fonction des radiales.

**8.** Procédé selon la revendication 7, caractérisé par le fait qu'on définit N zones, la zone de rang $i$, avec $1 \leq i \leq N$, étant caractérisée par une distance $d\alpha$ inférieure à $d\alpha_M/i$, où :
- $d\alpha$ est la distance séparant deux radiales, distance prise selon un angle $\alpha$, l'angle $\alpha$ étant défini par $tg\alpha = 2/A$ où A est le côté du pavé, exprimé en pixels ;
- $d\alpha_M$ est donné par :

$$d\alpha_M = \frac{A}{\cos\ \alpha}$$

et qu'une radiale sur $i$ seulement déclenche la lecture d'un bloc donné dans la zone de rang $i$.

**9.** Procédé selon la revendication 8, caractérisé par le fait que la courbe limitant la zone $i$ comporte une première partie (1), pour $0 \leq \theta \leq \alpha$ où $\theta$ est l'angle polaire, qui est un segment de droite défini par une abscisse $x$ constante et égale à $\frac{1}{i}\frac{A}{\epsilon}$, où $\epsilon$ est l'angle fait par deux radiales successives, et une deuxième partie (2), pour $\alpha \leq \theta \leq 45°$, qui suit un des losanges donné par

$$\frac{3}{2\ i\ \epsilon} \cdot$$

**10.** Procédé selon l'une des revendications 6 à 9, caractérisé par le fait que dans lesdites zones, la répartition des inhibitions est telle que l'alternance des blocs à lecture inhibée ou autorisée soit maximale.

**11.** Transformateur numérique d'images mettant en oeuvre le procédé selon l'une des revendications précédentes, caractérisé par le fait qu'il comporte en outre un ensemble (9) de circuits d'adressages recevant les coordonnées cartésiennes (x, y) élaborées par l'ensemble de conversion (3), ce dernier ensemble d'adressage comportant :
- des premiers moyens (91) assurant le calcul de l'adresse (L) du bloc dans la mémoire de blocs (8) ;
- des deuxièmes moyens (93) assurant le calcul du numéro du point dans le pavé ;
- des troisième moyens (92) assurant le calcul des coordonnées dans l'écran (7) du bloc en lecture dans la mémoire de blocs (8).

**12.** Transformateur numérique d'images selon la revendication 11, caractérisé par le fait qu'il comporte en outre deux ensembles de mémoires tampon du type FIFO (20), le premier (21) pour les signaux vidéo et le deuxième (22) pour les adresses, interposés entre la mémoire de blocs (8) et la mémoire image (4).

**13.** Transformateur numérique d'images selon l'une des revendications 11 ou 12, caractérisé par le fait qu'il comporte en outre des moyens de création de radiales fictives, destinées à homogénéiser par remplissage l'image formée sur l'écran (7), des moyens de regroupement (112) des radiales fictives avec le contenu de la mémoire de blocs (8), et des moyens de comparaison (17) déterminant si les points d'une radiale fictive appartiennent ou non au même pavé que les points de la radiale réelle précédente.

**14.** Transformateur numérique d'images selon l'une des revendications 11 à 13, caractérisé par le fait qu'il comporte en outre des moyens (14) de remise à zéro des blocs de la mémoire de blocs (8).

**15.** Transformateur numérique d'images selon l'une des revendications 11 à 14, caractérisé par le fait qu'il comporte en outre une mémoire de zone (15), déterminant si un bloc en lecture de la mémoire de blocs (8) appartient ou non à l'image qui doit être visualisée sur l'écran (7).

**Claims**

**1.** Method of optimising the storage of video signals in a digital image converter, the video signals being provided as polar coordinates in the form of a succession of radials, having the radar centre ($C_R$) as origin and forming an image, the converter including:
- a screen (7) with television scanning, on which the video signals are at least partially visualised;
- at least one radial memory (10) storing the radials successively;
- an assembly (3) of circuits affording the transformation from polar coordinates to Cartesian coordinates;
- an image memory (4) holding the digitised video signals according to an organisation which is identical to that of the screen (7);
- a block memory (8), divided into blocks, interposed between the radial memory (10) and the image memory (4), organised like the image memory (4), each of the blocks corresponding to a cluster of adjacent points on the screen;
- the video signals being transmitted from the radial memory (10) to the block memory (8) as and when the coordinates of each of the points of the relevant radial are transformed into Cartesian coordinates by the transformation assembly (3);

the method being characterised in that:
- the blocks being grouped in pairs (type A, type B), one of the blocks of a given pair is read out in parallel to the image memory (4) while the other block write-receives the video signals coming from the radial memory (10);
- if concentric diamonds ($L_i$) are considered, having the radar centre ($C_R$) as centre, and to which the clusters of the screen are connected by one of their vertices, each pair of blocks is assigned to a single diamond,
- and the first write to a block triggers the reading of the second block of the same pair.

**2.** Method according to Claim 1, characterised in that the second write to a given block triggers the resetting of the second block of the pair to zero.

**3.** Method according to one of the preceding claims, characterised in that, prior to the writing of a point to a block of the block memory (8), the contents of this memory (8) for the relevant point are read, the information written into block memory then resulting from the grouping (11) of the information previously read and of the information coming from the radial memory (10).

**4.** Method according to Claim 3, characterised in that the function applied during the grouping (11) is a maximum function.

**5.** Method according to one of the preceding claims, characterised in that the address of a block in block memory (8) consists of the serial number L of the diamond to which it belongs, this number being formed from the coordinates (x, y) of one of the vertices of the block in the following way:

$$L = X + Y$$

with:

$$X = x/A$$
$$Y = y/A$$

where A is the number of points per cluster side.

6. Method according to Claim 2, characterised in that for the zones of the image for which a cluster contains at least two radials, each containing at least two points inside the said cluster, the scheduling of the reading of the blocks is undertaken by disabling the reading of certain blocks during certain write operations.

7. Method according to Claim 6, characterised in that the disabling of the reading of certain blocks is carried out as a function of the radials.

8. Method according to Claim 7, characterised in that N zones are defined, the zone of rank i, with $1 \leq i \leq N$, being characterised by a distance $d\alpha$ less than $d\alpha_M/i$, where:
   - $d\alpha$ is the distance separating two radials, which distance is taken along an angle $\alpha$, the angle $\alpha$ being defined by $\tan\alpha = 2/A$ where A is the side of the cluster, expressed in pixels;
   - $d\alpha_M$ is given by :

$$d\alpha_M = \frac{A}{\cos \alpha}$$

and that only one radial out of i triggers the reading of a given block in the zone of rank i.

9. Method according to Claim 8, characterised in that the curve bounding the zone i includes a first part (1), for $0 \leq \theta \leq \alpha$ where $\theta$ is the polar angle, which is a straight line segment defined by a constant abscissa x and equal to $\frac{1}{i} \cdot \frac{A}{\epsilon}$, where $\epsilon$ is the angle made by two successive radials, and a second part (2), for $\alpha \leq \theta \leq 45°$, which follows one of the diamonds and is given by

$$\frac{3}{2 \, i \, \epsilon} \, .$$

10. Method according to one of Claims 6 to 9, characterised in that in the said zones, the scheduling of the disablings is such that the reading disabled or enabled alternating of the blocks is a maximum.

11. Digital image converter implementing the method according to one of the preceding claims, characterised in that it furthermore includes an assembly (9) of addressing circuits receiving the Cartesian coordinates (x, y) formulated by the transformation assembly (3), this addressing assembly including:
   - first means (91) affording calculation of the address (L) of the block in the block memory (8);
   - second means (93) affording calculation of the number of the point in the cluster;
   - third means (92) affording calculation of the coordinates in the screen (7) of the block being read from the block memory (8).

12. Digital image converter according to Claim 11, characterised in that it furthermore includes two buffer memory assemblies of the FIFO type (20), the first (21) for the video signals and the second (22) for the addresses, which are interposed between the block memory (8) and the image memory (4).

13. Digital image converter according to one of Claims 11 or 12, characterised in that it furthermore includes means of creating dummy radials intended to render the image formed on the screen (7) homogeneous by filling, means (112) of grouping the dummy radials together with the contents of the block memory (8), and comparison means (17) determining whether or not the points of a dummy radial belong to the same cluster as the points of the preceding real radial.

14. Digital image converter according to one of Claims 11 to 13, characterised in that it furthermore includes means (14) for resetting the blocks of the block memory (8) to zero.

15. Digital image converter according to one of Claims 11 to 14, characterised in that it furthermore includes a zone memory (15) determining whether or not a block being read from the block memory (8)

EP 0 236 177 B1

belongs to the image which is to be visualised on the screen (7).

**Patentansprüche**

1. Verfahren zur Optimierung der Speicherung von Videosignalen in einem digitalen Wandler, wobei die Videosignale in Polarkoordinaten in Form einer Folge von Radialen geliefert werden, deren Ursprung das Radarzentrum ($C_R$) ist und die ein Bild bilden, und wobei der Wandler enthält:
   - ein Sichtgerät (7) mit Fernsehabtastung, auf dem die Videosignale mindestens zum Teil angezeigt werden,
   - mindestens einen Radialen-Speicher (10) der nacheinander die Radialen speichert,
   - eine Gruppe (3) von Kreisen, die die Umwandlung von Polarkoordinaten in kartesische Koordinaten gewährleisten,
   - einen Bildspeicher (4), der die digitalisierten Videosignale gemäß einer Organisation enthält, die der des Sichtgeräts (7) identisch ist,
   - einen in Blocks aufgeteilten Blockspeicher (8), der zwischen den Radialen-Speicher (10) und den Bildspeicher (4) eingefügt ist und wie der Bildspeicher (4) organisiert ist, wobei jeder Block einem Quadrat von benachbarten Punkten auf dem Bildschirm des Sichtgeräts entspricht,
   - wobei die Videosignale vom Radialen-Speicher (10) zum Blockspeicher (8) im Rhythmus der Umwandlung der Koordinaten jedes der Punkte der betrachteten Radiale in kartesische Koordinaten durch die Gruppe von Wandlerkreisen (3) übertragen werden, dadurch gekennzeichnet, daß die Blöcke in Paaren (Typ A, Typ B) gruppiert sind und daß einer der Blöcke eines Paares parallel in Richtung auf den Bildspeicher (4) ausgelesen wird, während der andere Block desselben Paares im Schreibmodus ist und die Videosignale von dem Radialen-Speicher (10) empfängt,
   - daß, betrachtet man die konzentrischen Rauten ($L_i$), deren Zentrum das Radarzentrum ($C_R$) ist und an die die Bildschirmquadrate mit einer ihrer Ecken angehängt sind, jedes Blockpaar einer einzigen Raute zugewiesen ist,
   - und daß das erste Einschreiben in einen Block das Auslesen des zweiten Blocks desselben Paars auslöst.

2. Verfahren nach Anspruch 1, dadurch gekennzeichnet, daß das zweite Einschreiben in einen gleichen Block die Nullsetzung des zweiten Blocks dieses Paares auslöst.

3. Verfahren nach einem der vorhergehenden Ansprüche, dadurch gekennzeichnet, daß vor dem Einschreiben eines Punkts in einen Block des Blockspeichers (8) der Inhalt dieses Speichers (8) für den betrachteten Punkt ausgelesen wird, wobei die in den Blockspeicher eingeschriebene Information dann aus der Zusammenfassung (11) der vorher gelesenen Information und der von dem Radialen Speicher (10) kommenden Information resultiert.

4. Verfahren nach Anspruch 3, dadurch gekennzeichnet, daß die während der Zusammenfassung (11) angewandte Funktion eine Maximumfunktion ist.

5. Verfahren nach einem der vorhergehenden Ansprüche, dadurch gekennzeichnet, daß die Adresse eines Blocks im Blockspeicher (8) aus der Ordnungsnummer L der Raute besteht, der der Block angehört und die ausgehend von den Koordinaten (x,y) einer der Ecken des Blocks auf folgende Weise gebildet wird:
   $L = X + Y$ mit $X = x/A$ und $Y = y/A$
   wobei A die Anzahl von Punkten entlang einer Kante des Quadrats ist.

6. Verfahren nach Anspruch 2, dadurch gekennzeichnet, daß für die Zonen des Bildes, für die ein Quadrat mindestens zwei Radiale besitzt, welche je mindesten zwei Punkte innerhalb des Quadrats besitzen, eine Aufteilung des Lesens der Blocks durch Verhinderung des Auslesens bestimmter Blöcke während bestimmter Schreibvorgänge erfolgt.

7. Verfahren nach Anspruch 6, dadurch gekennzeichnet, daß die Verhinderung des Auslesens bestimmter Blöcke abhängig von den Radialen erfolgt.

18

8. Verfahren nach Anspruch 7, dadurch gekennzeichnet, daß man N Zonen definiert wobei die Zone des Rangs i (mit $1 \leq i \leq N$) durch einen Abstand d$\alpha$ kleiner als d$\alpha_M$/$_i$ gekennzeichnet ist, wobei:
- d$\alpha$ der Abstand zwischen zwei Radialen in Richtung eines Winkels $\alpha$ ist und der Winkel $\alpha$ definiert ist durch tg$\alpha = 2/A$ und A die Kantenlänge des Quadrats ausgedrückt in der Anzahl von Pixeln ist,
- d$\alpha_M$ definiert ist durch d$\alpha_M = A/\cos \alpha$, und daß nur eine von i Radialen das Auslesen eines gegebenen Blocks in der Zone des Rangs i veranlaßt.

9. Verfahren nach Anspruch 8, dadurch gekennzeichnet, daß die die Zone i begrenzende Kurve einen ersten Teil (1) für $0 \leq \Theta \leq \alpha$ besitzt, wobei $\theta$ der Polwinkel ist und wobei dieser Teil ein durch eine konstante Abszisse x definiertes Geradensegment ist, für das $x = (1/i).(A/\epsilon)$ gilt, und wobei $\epsilon$ der Winkel zwischen zwei aufeinanderfolgenden Radialen ist, und daß diese Kurve einen zweiten Teil (2) für $\alpha \leq \theta \leq 45°$ besitzt, der einer der durch $3/(2i\epsilon)$ gegebenen Raute folgt.

10. Verfahren nach einem der Ansprüche 6 bis 9, dadurch gekennzeichnet, daß in diesen Zonen die Verteilung der inhibierten Auslesungen so ist, daß der Wechsel zwischen inhibierten Leseblöcken und zugelassenen Auslesungen maximal ist.

11. Digitaler Bildwandler zur Durchführung des Verfahrens nach einem der vorhergehenden Ansprüche dadurch gekennzeichnet, daß er weiter eine Einheit von Adressenkreisen enthält, die die kartesischen Koordinaten (x,y) empfangen, die von der Gruppe von Wandlerkreisen (3) ausgearbeitet wurden, wobei die Adresseneinheit aufweist:
- erste Mittel (91) zur Berechnung der Adresse (L) des Blocks in dem Blockspeicher (8),
- zweite Mittel (93) zur Berechnung der Nummer des Punkts in dem Quadrat,
- dritte Mittel (92) zur Berechnung der Koordinaten des aus dem Blockspeicher (8) auszulesenden Blocks in Koordinaten des Sichtgerätebildschirms (7).

12. Digitaler Bildwandler nach Anspruch 11 dadurch gekennzeichnet, daß er weiter zwei Pufferspeichereinheiten vom FIFO-Typ (20) aufweist, von denen die erste (21) für die Videosignale und die zweite (22) für die Adressen vorgesehen ist und die zwischen den Blockspeicher (8) und dem Bildspeicher (4) eingefügt sind.

13. Digitaler Bildwandler nach einem der Ansprüche 11 oder 12, dadurch gekennzeichnet, daß er weiter Mittel zur Erzeugung von fiktiven Radialen, die dazu bestimmt sind, durch Auffüllen das auf dem Bildschirm (7) gebildete Bild zu homogenisieren, Zusammenfassungsmittel (112) für fiktive Radiale mit dem Inhalt des Blockspeichers (8) und Vergleichsmittel (17) aufweist, die bestimmen, ob die Punkte einer fiktiven Radiale demselben Quadrat wie die Punkte der vorhergehenden reellen Radialen angehören oder nicht.

14. Digitaler Bildwandler nach einem der Ansprüche 11 bis 13, dadurch gekennzeichnet, daß er weiter Mittel (14) zur Nullsetzung der Blöcke des Blockspeichers (8) enthält.

15. Digitaler Bildwandler nach einem der Ansprüche 11 bis 14, dadurch gekennzeichnet, daß er weiter einen Zonenspeicher (15) aufweist, der bestimmt, ob ein gerade aus dem Blockspeicher (8) ausgelesener Block dem Bild, das auf dem Sichtgerätebildschirm (7) angezeigt werden soll, angehört oder nicht.

EP 0 236 177 B1

VIDEO →

1

10 — MÉMOIRE RADIALE

2

RÉMANENCE

4

CONVERSION DE COORDONNÉES

3

θ →

ADRESSAGE ÉCRITURE

MÉMOIRE IMAGE

ADRESSAGE LECTURE

LECTURE EN MODE TV

5

CIRCUITS DE SORTIE TV

6

VISUALISATION TV

7

FIG_1

FIG_2

EP 0 236 177 B1

# FIG_3

FIG_4

EP 0 236 177 B1

FIG_5

# FIG_6

FIG_7

26

# FIG_8-a

# FIG_8-b

# FIG_9

FIG_10

FIG_11a

FIG_11b

# FIG_12